# EUROPÄISCHE PATENTANMELDUNG

(11) **EP 1 798 633 A1**
(43) Veröffentlichungstag der Anmeldung: **20.06.2007**
(21) Anmeldenummer: 05025358.2
(22) Anmeldetag: 21.11.2005
(51) Int. Cl.: G06F 3/033

(54) **System mit einer Projektierungsvorrichtung und einer Mensch-Maschine-Schnittstelle**

(71) Anmelder: SIEMENS AKTIENGESELLSCHAFT, 80333 München (DE)
(72) Erfinder: Bischoff, Toni Gerhard, 91580 Petersaurach (DE)

(57) **Zusammenfassung**

Erfindungsgemäß wird ein System (1) mit einer Projektierungsvorrichtung (3) und einer Mensch-Maschine-Schnittstelle (5) mit einer Eingabevorrichtung (2) und einer Ausgabevorrichtung (6) angegeben. Als Anzeige (16) der Eingabevorrichtung (2) sind statische Informationen mit einem Mittel (4) visualisierbar. Als Rückmeldung auf der Anzeige (16) werden dynamische Informationen mittels der Ausgabevorrichtung (6) ausgegeben. Die statischen Informationen, die dynamischen Ausgabeinformationen und Eingaben sind derart projektiert, dass als Ergebnis ein auf den statischen Informationen basierendes Layout und Daten zur Konfiguration der Eingabevorrichtung (2) und der Ausgabevorrichtung (6) bereitstellbar sind. Da die Anzeige der Eingabevorrichtung (2) flexibel veränderbar ist, werden die Kosten bei der Herstellung oder Umbau der Eingabevorrichtung (2) reduziert.

## Beschreibung

Die Erfindung betrifft ein System mit einer Projektierungsvorrichtung und einer Mensch-Maschine-Schnittstelle, die eine Eingabevorrichtung und eine Ausgabevorrichtung aufweist.

Als Eingabevorrichtung bietet ein Touchscreen (Berührungsbildschirm) hervorragende Eigenschaften im Sinne von HMI (Human-Maschine Interface) an, weil man Aktionen direkt auf Objekten der Anzeige des Touchscreens ausführt und sowohl Eingaben als auch Ausgaben über dieses Gerät möglich sind. Aber konventionelle Touchscreens werden heute meist sehr zeitaufwendig mit einzelnen diskreten elektrischen Bauteilen realisiert. Im fertigen Zustand sind sie sehr unflexibel und müssen bei technischen Änderungen oft komplett neu aufgebaut werden. Dies liegt allerdings auch an hohen Fertigungskosten. Da ein Touchscreen sehr häufig an frei programmierbare speicherprogrammierbare Steuerungseinheiten angeschlossen ist, ergibt sich hier ein direkter Widerspruch. Touchscreen-Anwendungen sind auf eine bestimmte Hardware-Software-Plattform optimiert. Häufig laufen Anwendungen, die für eine bestimmte Anzeigekonfiguration mit Touchscreen entwickelt wurden, mit anderen Grafikeinstellungen nicht korrekt. Dabei ist die graphische Konfiguration der Touchscreen-Anzeige fest vorgegeben und kann dadurch nicht flexibel verändert werden.

Der Erfindung liegt die Aufgabe zu Grunde, eine Möglichkeit zur Verfügung zu stellen, eine Mensch-Maschine-Schnittstelle flexibel zu projektieren.

Diese Aufgabe wird durch ein System gelöst, welches eine Projektierungsvorrichtung und eine Mensch-Maschine-Schnittstelle mit einer Eingabevorrichtung und einer Ausgabevorrichtung umfasst, wobei die Projektierungsvorrichtung zur Projektierung der Mensch-Maschine-Schnittstelle vorgesehen ist, wobei statische Informationen mit einem ersten Mittel visualisierbar sind, wobei dynamische Ausgabeinformationen mit der Ausgabevorrichtung darstellbar sind, wobei Eingaben mit der Eingabevorrichtung erfassbar sind, wobei mit der Projektierungsvorrichtung die Verknüpfung der statischen Informationen, der dynamischen Ausgabeinformationen und der Eingaben derart projektierbar ist, dass als Ergebnis ein auf den statischen Informationen basierendes Layout und Daten zur Konfiguration der Eingabevorrichtung und der Ausgabevorrichtung bereitstellbar sind.

Der Erfindung liegt die Idee zugrunde, die Anzeige einer Eingabevorrichtung durch ersetzbare statische Informationen und dynamische Ausgabeinformationen darzustellen, wobei insbesondere das Layout der Anzeige durch die statischen Informationen und die Rückmeldungen von Eingaben durch die dynamischen Ausgabeinformationen dargestellt werden. Ein System mit einer Projektierungsvorrichtung und einer Mensch-Maschine-Schnittstelle mit einer Eingabevorrichtung und einer Ausgabevorrichtung wird so ausgebildet, dass die Projektierungsvorrichtung zur Projektierung der Mensch-Maschine-Schnittstelle vorgesehen ist und die Verknüpfung der statischen Informationen, der dynamischen Ausgabeinformationen und der Eingaben, die über die Eingabevorrichtung ausgeführt sind, bereitgestellt werden. Diese Projektierung wird derart ausgeführt, dass als Ergebnis ein auf den statischen Informationen basierendes Layout und Daten zur Konfiguration der Eingabevorrichtung und der Ausgabevorrichtung bereitgestellt werden. Daher ist die Eingabe mit der Eingabevorrichtung erfassbar.

Durch das erfindungsgemäße System kann die Bereitstellung von Eingaben, die durch eine Mensch-Maschine-Schnittstelle ausgeführt sind, vereinfacht werden. Es ist möglich, eine derartige Eingabevorrichtung in mehreren Bereichen zu verwenden und die Kosten bei der Herstellung oder Umbau der Eingabevorrichtung zu reduzieren, weil die Anzeigemöglichkeit der Mensch-Maschine-Schnittstelle flexibel verändert werden kann.

Vorteilhafterweise ist die Eingabevorrichtung ein Touchscreen (Berührungsbildschirm). Ein Touchscreen bietet hervorragende Eigenschaften im Sinne der HMI (Human-Maschine Interface). Diese vorteilhafte Ausgestaltung der Erfindung ermöglicht es somit, dass die Anzeigemöglichkeiten eines Touchscreens flexibel änderbar sind, so dass der Touchscreen eine gewisse Anpassungsfähigkeit aufweist. Beispielsweise können Tasten, Knöpfe, Lampenanordnungen usw., die auf dem Touchscreen dargestellt sind, ohne großen Aufwand flexibel verändert werden.

Gemäß einer weiteren vorteilhaften Ausgestaltung der Erfindung wird das Layout als ein Druckbild auf dem ersten Mittel bereitgestellt und die Mensch-Maschine-Schnittstelle weist eine Aufnahmevorrichtung zur Aufnahme des ersten Mittels auf. Zur Visualisierung des Layouts werden zuerst die grafischen Daten des Layouts durch die Projektierungsvorrichtung ausgerechnet. Anschließend wird das Layout durch einen herkömmlichen Drucker auf einem druckbaren Material gedruckt. Ein dafür geeignetes Material kann z.B. Druckpapier oder Folie sein. Selbstverständlich kann das Material auch eine Metallplatte bzw. Plastikplatte sein, usw. Das Material kann mittels der Aufnahmevorrichtung als Anzeige einfach in der Eingabevorrichtung eingebaut werden, wobei die Aufnahmevorrichtung ein reiner Mechanismus sein kann, z.B. eine Klammer. Die Anzeigemöglichkeit der Eingabevorrichtung ist daher flexibel veränderbar bzw. ersetzbar. Bei der Veränderung wird die Anzeige ohne Demontierung der Mensch-Maschine-Schnittstelle oder der Eingabevorrichtung ersetzt. Dementsprechend können Anzeigekonfiguration wie Tasten, Knöpfe, Lampenanordnungen usw. ohne großen Aufwand verändert werden.

Um einem Benutzer eine intuitive Rückmeldung geben zu können, ist die Ausgabevorrichtung gemäß einer weiteren vorteilhaften Ausgestaltung der Erfindung ein Projektionslaser. Dieser Projektionslaser kann Laserstrahlen projizieren. Dadurch können dynamische Ausgabeinformationen z. B. als Rückmeldungen zu den Eingaben erzeugt werden. Wird eine Eingabe von der Eingabevorrichtung erkannt, kann so beispielsweise eine Meldeleuchte bzgl. der ausgeführten Eingabe mit der Ausgabevorrichtung ausgegeben werden, um dem Benutzer eine Rückmeldung zu geben. Außerdem können weitere dynamische Informationen, z.B. bewegliche oder blinkende Texte als Hilfsinformationen für Eingaben, zur Anzeige gebracht werden. Vorteilhafterweise sind die von dem Projektionslaser projizierten Laserstrahlen farbig.

Außer der dynamischen Ausgabeinformation aus Laserstrahl ist ein haptisches, fühlbares Feedback ein wichtiger zusätzlicher Reiz bei der Gestaltung von Mensch-Maschinen-Schnittstellen. Daher weist die Eingabevorrichtung gemäß einer weiteren vorteilhaften Ausgestaltung der Erfindung Mittel zur Erzeugung eines Vibrationssignals auf, insbesondere als eine Rückmeldung zur Bestätigung von Eingaben.

Die Stärke bzw. die Frequenz der Vibration ist gemäß einer weiteren vorteilhaften Ausgestaltung der Erfindung bei Bedarf einstellbar. Das Vibrationssignal kann insbesondere auch ein akustisches Signal sein. Dann ist die Rückmeldung der Eingaben ebenfalls für einen Benutzer fühlbar und ggf. hörbar.

Darüber hinaus umfasst die Eingabevorrichtung gemäß einer weiteren vorteilhaften Ausgestaltung der Erfindung mindestens eine Schnittstelle zum Anschluss einer externen Vorrichtung. Damit kann man diese Eingabevorrichtung mit anderen Geräten kombinieren und die Verwendungsmöglichkeiten erweitern. Mittels Standard-Schnittstellen wie RS485, Ethernet und USB kann an die Eingabevorrichtung beispielsweise ein Bedienfeld (Operatorpanel oder Tastatur) als Erweiterungseingabevorrichtung angeschlossen werden.

Nachfolgend wird die Erfindung anhand der in den Figuren dargestellten Ausführungsbeispiele näher beschrieben und erläutert.

Es zeigen:
- FIG 1: ein System mit einer Projektierungsvorrichtung und einer Mensch-Maschine-Schnittstelle,
- FIG 2: eine Mensch-Maschine-Schnittstelle,
- FIG 3: eine Draufsicht einer Mensch-Maschine-Schnittstelle und
- FIG 4: ein Beispiel für die Anzeige einer Eingabevorrichtung.

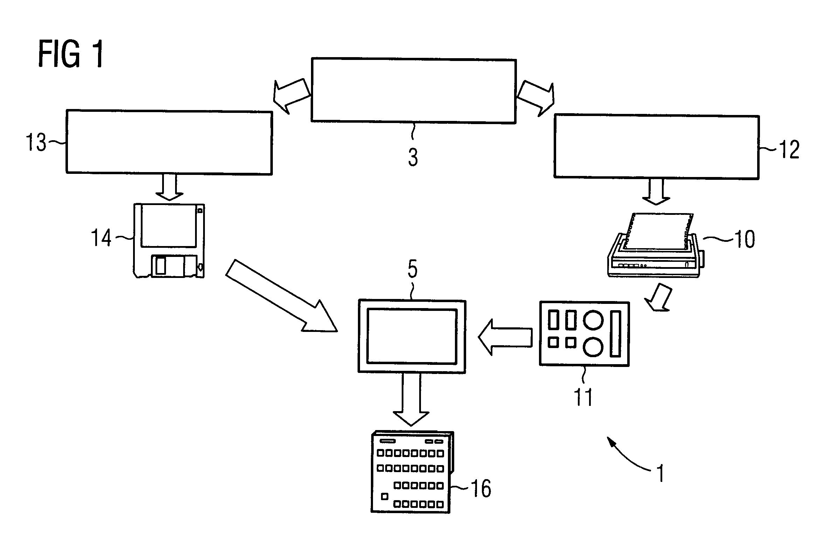

In FIG 1 wird ein System mit einer Projektierungsvorrichtung 3 und einer Mensch-Maschine-Schnittstelle 5 dargestellt. Durch das System 1 werden Eingaben über die Mensch-Maschine-Schnittstelle 5 bereitgestellt. Eine Projektierungsvorrichtung 3, z. B. ein Projektierungsrechner, ist zur Projektierung der Mensch-Maschine-Schnittstelle 5 vorgesehen. Die grafischen Daten 12 und die Funktionsdaten 13 der Mensch-Maschine-Schnittstelle 5 werden in der Projektierungsvorrichtung 3 konfiguriert, d.h. das Layout der Anzeige 16 der Mensch-Maschine-Schnittstelle 5 und die mit dem Layout verknüpften Eingabefunktionen werden projektiert. Bei der Projektierung der Funktionsdaten 13 werden die Koordinaten von Eingabefunktionen und deren Rückmeldungen ebenfalls bereitgestellt. Zudem werden dynamische Informationen, z. B. in Form von Rückmeldungen mittels projizierter Laserstrahlen, projektiert. Anschließend werden die grafischen Daten an einen herkömmlichen Drucker 10 weitergeleitet, wohingegen die Funktionsdaten in der Mensch-Maschine-Schnittstelle 5 oder in einem tragbaren Speicher 14, z.B. einer CD, einer Diskette oder einem USB-Speicher, gespeichert werden. Durch den Drucker 10 wird das Layout auf einem Druckpapier 11 gedruckt, anschließend kann das gedruckte Druckpapier 11 als Anzeige 16 in der Mensch-Maschine-Schnittstelle 5 eingesetzt werden. Die Eingaben, die gemäß dem Layout an der Mensch-Maschine-Schnittstelle 5 ausgeführt werden, sind wie bei konventionellen Mensch-Maschine-Schnittstellen erfassbar. Dadurch wird eine Mensch-Maschine-Schnittstelle 5 bereitgestellt, deren Anzeige 16 flexibel und kostengünstig einsetzbar ist. Eine derartige Mensch-Maschine-Schnittstelle 5 ermöglicht die Verwendung in mehreren Bereichen.

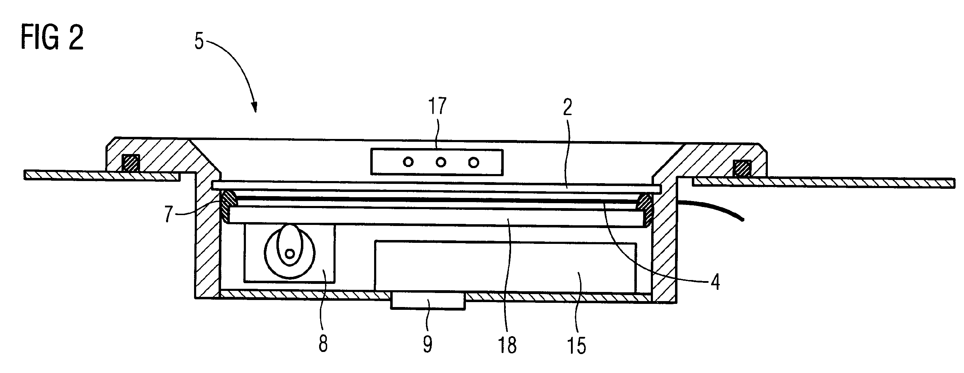

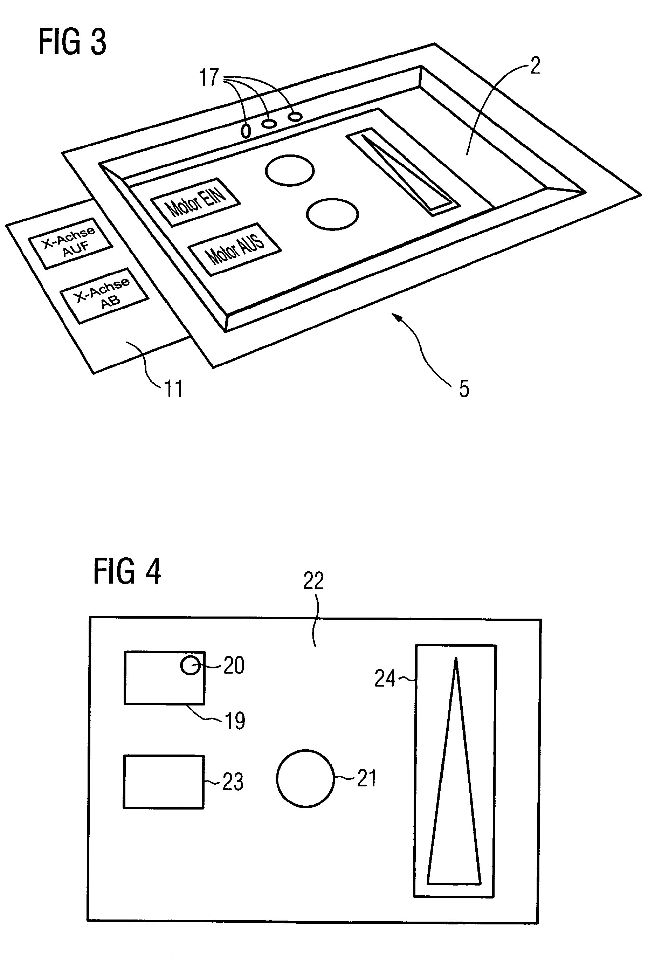

FIG 2 zeigt eine Mensch-Maschine-Schnittstelle 5, die einen Touchscreen 2 zur Eingabe, eine Anzeigefläche 4 zur Visualisierung der Anzeige 16 des Touchscreens 2 und eine elektronische Einheit 15 zur Speicherung und Auswertung der Funktionsdaten 13 aufweist. Wie bereits erläutert bzw. wie in FIG 3 dargestellt, kann die Anzeigefläche 4 ein Druckpapier 11 oder eine Folie sein, welche leicht ohne Demontierung der Mensch-Maschine-Schnittstelle 5 unter dem Touchscreen 2 eingesetzt bzw. herausgenommen werden kann. Dementsprechend umfasst die Mensch-Maschine-Schnittstelle 5 eine Klammer 7 als Aufnahmevorrichtung und als Dämpfungsmittel, um die Anzeigefläche 4 zu fixieren. Die Anzeigestruktur (Layout) des Touchscreens 2, wie Tasten, Knöpfe, Lampenanordnungen, ist auf der Anzeigefläche 4 gedruckt visualisiert (FIG 3). Die Mensch-Maschine-Schnittstelle 5 umfasst zudem einen Projektionslaser 17, der farbige Laserstrahlen auf der Anzeigefläche 4 projizieren kann. Mittels der Laserstrahlen können dynamische Informationen, z.B. Meldeleuchten, auf der Anzeige 16 des Touchscreen 2 dargestellt werden, um auf eine Rückmeldung bzw. eine Bestätigung von Eingaben hinzuweisen. Darüber hinaus weist die Mensch-Maschine-Schnittstelle 5 eine Vibrations-Technologie auf, um eine haptische Rückmeldung (Feedback) zu stimulieren. Zur Vornahme von haptischen Rückmeldungen wird die Mensch-Maschine-Schnittstelle 5 mit einem Vibrationsmodul 8 und einer Vibrationsplatte 18 ausgerüstet. Das Vibrationsmodul 8 berechnet nach einer Eingabe ein Frequenzsignal, dementsprechend kann eine Vibration über die Vibrationsplatte 18 generiert werden. Die Frequenz des Signals ist einstellbar, wodurch auch ein akustisches Signal erzeugt werden kann. Außerdem umfasst die Mensch-Maschine-Schnittstelle 5 eine Schnittstelle 9 zum Anschluss externer Geräte/Vorrichtungen. Mittels dieser Schnittstelle 9 kann ein externes Gerät, z.B. eine Maus, als Erweiterungseingabevorrichtung an die Mensch-Maschine-Schnittstelle 5 angeschlossen werden.

Das Layout des Touchscreens 2 wird gemäß FIG 3 auf einem Druckpapier 11 gezeigt, weiterhin wird ein farbiger Laserstrahl von dem Projektionslaser 17 auf das Druckpapier 11 projiziert. Der Laserstrahl dient z. B. als Rückmeldung oder Bestätigungsinfo für eine Eingabe, die über den Touchscreen 2 ausgeführt wurde.

FIG 4 zeigt ein Beispiel für die Anzeige 22 einer Mensch-Maschine-Schnittstelle mit Touchscreen. Wenn man auf die Taste 19 drückt, wird durch den projizierten Laserstrahl eine Meldeleuchte 20 an dieser Taste 19 und damit eine sichtbare Bestätigung für diese Eingabe erzeugt. Das kann z. B. eine farbige Zustandsanzeige sein. Außerdem kann eine dynamische bzw. blinkende Darstellung (Texte oder Bild) 21 als dynamische Hilfsinformationen auf dem Layout angezeigt werden. Gemäß dem in FIG 4 gezeigten Ausführungsbeispiel weist die Mensch-Maschine-Schnittstelle zudem ein Feedback in Form von Vibration auf. So vibriert die Taste 19 mit jeder Berührung anders. Die Taste 23 vibriert bei Berührung kontinuierlich. Der Slider 24 ist hingegen mit einer Grundvibration versehen, die beim Ziehen verstärkt oder geschwächt wird.

## Patentansprüche

1. System (1) mit einer Projektierungsvorrichtung (3) und einer Mensch-Maschine-Schnittstelle (5) mit einer Eingabevorrichtung (2) und einer Ausgabevorrichtung (6), wobei die Projektierungsvorrichtung (3) zur Projektierung der Mensch-Maschine-Schnittstelle (5) vorgesehen ist, wobei statische Informationen mit einem ersten Mittel (4) visualisierbar sind, wobei dynamische Ausgabeinformationen mit der Ausgabevorrichtung (6) darstellbar sind, wobei Eingaben mit der Eingabevorrichtung (2) erfassbar sind, wobei mit der Projektierungsvorrichtung (3) die Verknüpfung der statischen Informationen, der dynamischen Ausgabeinformationen und der Eingaben derart projektierbar ist, dass als Ergebnis ein auf den statischen Informationen basierendes Layout und Daten zur Konfiguration der Eingabevorrichtung (2) und der Ausgabevorrichtung (6) bereitstellbar sind.

2. System (1) nach Anspruch 1,
**dadurch gekennzeichnet, dass**
die Eingabevorrichtung (2) ein Touchscreen ist.

3. System (1) nach Anspruch 1 oder 2,
**dadurch gekennzeichnet, dass**
das Layout als ein Druckbild auf dem ersten Mittel (4) bereitstellbar ist und die Mensch-Maschine-Schnittstelle (5) eine Aufnahmevorrichtung (7) zur Aufnahme des ersten Mittels (4) aufweist.

4. System (1) nach einem der Ansprüche 1 bis 3,
**dadurch gekennzeichnet, dass**
die Ausgabevorrichtung (6) ein Projektionslaser ist.

5. System (1) nach Anspruch 4,
**dadurch gekennzeichnet, dass**
ein von dem Projektionslaser projizierter Laserstrahl farbig ist.

6. System (1) nach einem der vorherigen Ansprüche,
**dadurch gekennzeichnet, dass**
die dynamischen Ausgabeinformationen Rückmeldungen zu den Eingaben sind.

7. System (1) nach einem der vorherigen Ansprüche,
**dadurch gekennzeichnet, dass**
die Eingabevorrichtung (2) Mittel (8) zur Erzeugung eines Vibrationssignals aufweist.

8. System (1) nach Anspruch 7,
**dadurch gekennzeichnet, dass**
die Stärke und/oder die Frequenz des Vibrationssignals einstellbar ist.

9. System (1) nach einem der vorherigen Ansprüche,
**dadurch gekennzeichnet, dass**
die Eingabevorrichtung mindestens eine Schnittstelle (9) zum Anschluss einer externen Vorrichtung umfasst.
